# EUROPÄISCHE PATENTANMELDUNG

(11) **EP 0 829 711 A2**
(43) Veröffentlichungstag der Anmeldung: **18.03.1998**
(21) Anmeldenummer: 97113551.2
(22) Anmeldetag: 06.08.1997
(51) Int. Cl.: G01L 9/06

(54) **Druckschalteinrichtung, insbesondere für die Kraftfahrzeugtechnik**

(30) Priorität: 16.09.1996 DE 19637607
(71) Anmelder: TRW FAHRZEUGELEKTRIK GmbH & CO. KG, 78315 Radolfzell (DE)
(72) Erfinder: Probst, Uwe, 78256 Steisslingen (DE); Skofljanec, Robert, 78132 Hornberg (DE)
(74) Vertreter: Eder, Eugen, Dipl.-Ing.

(57) **Zusammenfassung**

Die Erfindung betrifft eine Druckschalteinrichtung, insbesondere für die Kraftfahrzeugtechnik, mit in einem Gehäuse (3) angeordnetem Drucksensor (21), welcher ein dem Druck (p) eines einer Zuführöffnung (15) des Gehäuses (3) zugeführten Druckmediums entsprechendes elektrisches Signal (U) erzeugt, und mit einer Auswerte- und Schalteinheit (55), welcher das elektrische Sensorsignal (U) zugeführt ist und welche das Sensorsignal (U) mit wenigstens einem Schaltschwellwert vergleicht und bei Überschreiten und/oder Unterschreiten des Schaltschwellwertes eine Schaltfunktion oder eine Folge von Schaltfunktionen auslöst.

## Beschreibung

Die Erfindung betrifft eine Druckschalteinrichtung, insbesondere für die Kraftfahrzeugtechnik, welche es ermöglicht, Schaltvorgänge abhängig von dem Druck eines zu überwachenden Druckmediums auszulösen. Solche Druckschalteinrichtungen finden beispielsweise zur Überwachung des Öldrucks in einem Kfz-Motor oder des Bremsdrucks Verwendung.

Bisher bekannte Druckschalter umfassen in der Regel ein mechanisches Stellglied, welches abhängig vom Druck des zu überwachenden Druckmediums eine bestimmte Position einnimmt und infolge von Druckveränderungen eine beispielsweise translatorische Bewegung vollführt. Durch die Bewegung des Stellglieds wird bei einem bestimmten Schwellwertdruck ein elektrischer Kontakt geschlossen. Die Bestimmung des Schwellwertdrucks kann dadurch erfolgen, daß entweder eine das Stellglied beaufschlagende Federkraft, welche entgegen der durch das Druckmedium erzeugten Druckkraft entgegenwirkt, verändert wird oder daß der zu betätigende Schaltkontakt entlang des Bewegungsweges des Stellglieds verschoben wird.

Es sind auch bereits derartige mechanische Druckschalter bekannt, bei denen nicht nur ein einziger, sondern mehrere Schaltschwellwerte definiert sind. Das Festlegen jedes Schaltschwellwerts erfolgt wiederum durch das Vorsehen jeweils eines Kontakts an einer vorbestimmten Schaltposition entlang des Verstellwegs des bewegbaren Stellglieds, welche dem gewünschten Druck-Schaltschwellwert entspricht.

Diese bekannten mechanischen Druckschalter weisen den Nachteil auf, daß eine Anpassung des Schalters an Kundenwünsche, beispielsweise das Vorsehen von mehr oder weniger Schaltkontakten bzw. Druck-Schaltschwellwerten jeweils ein Redesign des Schalters erforderlich macht. Auch für den Fall, daß lediglich eine Veränderung eines oder mehrerer Schaltschwellwerte gewünscht wird, ist jeweils ein mechanischer Eingriff bzw. ein erneutes Redesign des Schalters erforderlich.

Der vorliegenden Erfindung liegt daher die Aufgabe zugrunde, eine Druckschalteinrichtung, insbesondere für die Kraftfahrzeugtechnik, zu schaffen, welche ein einfaches Anpassen an Kundenwünsche, insbesondere eine Veränderung der Anzahl der Schaltschwellwerte oder eine Veränderung der Schaltschwellwerte, ermöglicht.

Die Erfindung löst diese Aufgabe mit den Merkmalen des Patentanspruchs 1.

Die Erfindung geht von der Erkenntnis aus, daß durch die Verwendung eines Drucksensors, welcher den Druck des zu überwachenden Druckmediums in ein elektrisches Signal umwandelt, und durch eine entsprechende elektronische Auswertung des Signals eine hohe Flexibilität der Druckschalteinrichtung hinsichtlich deren Anpassung an Kundenwünsche ermöglicht wird, da dies durch relativ einfache Änderungen bei der Signalauswertung des Sensors erfolgen kann.

Bei der bevorzugten Ausführungsform der erfindungsgemäßen Druckschalteinrichtung ist die das elektrische Signal des Drucksensors auswertende und verarbeitende Auswerte- und Schalteinheit zusammen mit dem Drucksensor in einem Gehäuse der Druckschalteinrichtung integriert. Zwar kann das elektrische Sensorsignal, welches vorzugsweise eine dem Druck des zu überwachenden Druckmediums proportionale Spannung ist, auch einer externen, beispielsweise übergeordneten Steuereinheit zugeführt werden, jedoch wäre es hierzu erforderlich, das analoge Sensorsignal über eine längere Strecke zu führen, wobei mit der elektromagnetischen Einstreuung von Störungen und mit hierdurch verursachten Fehlfunktionen des Systems zu rechnen wäre.

Bei der bevorzugten Ausführungsform der Erfindung weist die Auswerte- und Schalteinheit einen Speicher zur Speicherung eines oder mehrerer Schaltschwellwerte zur Definition entsprechender Schaltpunkte auf.

Gleichzeitig kann einem oder mehreren Schaltschwellwerten ein Timer oder eine vorbestimmte Timerzeit zugeordnet sein, so daß der nach jedem Schaltvorgang erreichte Schaltzustand zumindest für die dem betreffenden Schaltschwellwert zugeordnete Timerzeit aufrechterhalten werden kann. Auf diese Weise kann eine zeitliche Hysterese oder die Funktion eines monostabilen Kippgliedes realisiert werden.

Zur Realisierung einer Hysterese hinsichlicht des Drucks können zudem jeweils zwei Schaltschwellwerte einander zugeordnet sein, wobei der höhere oder der niedrigere der beiden Schwellwerte den Schaltpunkt für das Umschalten von einem ersten Schaltzustand in einem zweiten Schaltzustand und der jeweils andere der beiden Schaltschwellwerte den Schaltpunkt für das Umschalten von dem zweiten Schaltzustand in den ersten Schaltzustand definiert. So kann beispielsweise bei einem Druckanstieg bei dem höheren der beiden Schaltschwellwerte ein Signal ausgelöst werden, welches erst dann wieder verschwindet, wenn der niedrigere der beiden Schaltschwellwerte unterschritten wird. Auf diese Weise wird ein instabiler Zustand und ein damit verbundenes dauerndes Hin- und Herschalten zwischen zwei Zuständen vermieden, was bei der Verwendung lediglich eines einzigen Schaltschwellwerts der Fall wäre, wenn der Druck kurzzeitige Schwankungen im Bereich des Schaltpunkts aufweisen würde.

Bei der bevorzugten Ausführungsform der Erfindung sind die Schaltschwellwerte in einem nicht-flüchtigen Speicher, beispielsweise einem ROM (Read Only Memory), gespeichert.

Die Auswerte- und Schalteinheit kann als Mikroprozessorschaltung ausgebildet sein, wobei die Schaltfunktionen durch eine geeignete Software realisierbar sind. Das Anpassen der Druckschalteinrichtung an Kundenwünsche kann dann einfach durch eine Änderung der Software erfolgen, vorausgesetzt, die Mikroprozessorschaltung ist hardwaremäßig ausreichend dimensioniert, insbesondere im Hinblick auf die Anzahl der möglichen Schaltausgänge.

Bei der bevorzugten Ausführungsform der Erfindung umfaßt die Auswerte- und Schalteinheit einen anwenderspezifischen integrierten Schaltkreis (ASIC) mit dem die gewünschten Schaltfunktionen realisierbar sind. Bei einem Redesign des Schalters ist daher lediglich ein Redesign des anwenderspezifischen integrierten Schaltkreises erforderlich, was jedoch im Vergleich zu einem mechanischen Redesign bisher bekannter mechanischer Druckschalter mit einem weitaus geringeren Aufwand verbunden ist.

Bei der bevorzugten Ausführungsform der Erfindung sind ein oder mehrere Ausgänge der Auswerte- und Schalteinheit mit entsprechenden Anschlußkontakten des Gehäuses verbunden, an denen die Schaltfunktionen abgreifbar sind. Weist die Auswerte- und Schalteinheit eine entsprechende Leistungselektronik auf, so ist sogar direkt das Schalten von Verbrauchern auch höherer Leistung möglich.

In einer weiteren Ausführungsform kann der Auswerte- und Schalteinheit ein Businterface nachgeschaltet sein, mit Hilfe dessen die Auswerte- und Schalteinheit Informationen über zu bewirkende Schaltfunktionen an eine übergeordnete Steuereinheit übermitteln kann. Die eigentlichen Schaltfunktionen können dann von der übergeordneten Steuereinheit ausgelöst werden. Das Businterface kann hierzu ebenfalls im Gehäuse der Druckschalteinrichtung angeordnet sein.

Weitere Ausführungsformen der Erfindung ergeben sich aus den Unteransprüchen.

Die Erfindung wird nachfolgend anhand in der Zeichnung dargestellter Ausführungsbeispiele näher erläutert.

In der Zeichnung zeigen:
- Fig. 1: einen Längsschnitt durch das Gehäuse einer Druckschalteinrichtung nach der Erfindung,
- Fig. 2a: ein Blockschaltbild der Elektronik zur Signalverarbeitung in einer ersten Ausführungsform der Erfindung und
- Fig. 2b: das Blockschaltbild der Elektronik zur Signalverarbeitung in einer zweiten Ausführungsform der Erfindung.

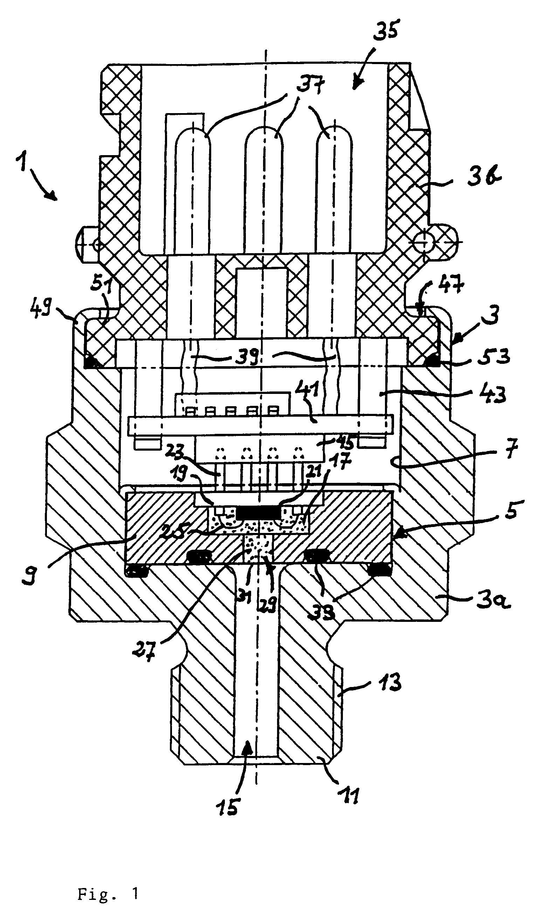

Fig. 1 zeigt eine Ausführungsform einer erfindungsgemäßen Druckschalteinrichtung 1, die aus einem zweiteiligen Gehäuse 3 besteht, in welchem eine Druckmeßzelle 5 angeordnet ist.

Die Druckmeßzelle 5 ist in einem unteren, ersten Gehäuseteil 3a montiert, welches hierzu eine Ausnehmung 7 aufweist. Die Ausnehmung 7 kann beispielsweise in Form einer Bohrung ausgebildet sein, welche zumindest in ihrem unterem Teil einen Innendurchmesser aufweist, der im wesentlichen dem Außendurchmesser des vorzugsweise scheibenförmig ausgebildeten Meßzellengehäuses 9 entspricht.

Dieses erstes Gehäuseteil 3a weist in seinem unteren Bereich einen im wesentlichen kreiszylindrischen Fortsatz 11 auf, welcher mittels eines daran vorgesehenen Außengewindes 13 in eine entsprechende Gewindebohrung am Montageort, beispielsweise an einem Zylinder eines Bremssystems oder im Motorblock, einschraubbar ist.

Für das Zuführen des Druckmediums, dessen Druck zu erfassen ist, ist ausgehend von der Stirnfläche des Fortsatzes 11 des ersten Gehäuseteils 3a eine Zuführöffnung 15 vorgesehen, durch welche das Druckmedium an die Druckmeßzelle herangeführt wird.

Die Druckmeßzelle weist in ihrem Meßzellengehäuse 9 einen Durchbruch 17 auf, der, wie in Fig. 1 dargestellt, im unteren Bereich des Meßzellengehäuses 9 als Bohrung relativ geringen Durchmessers und im oberen Bereich des Meßzellengehäuses 9 als Bohrung größeren Durchmessers ausgebildet sein kann. Im oberen Bereich der Bohrung größeren Durchmessers ist ein bezüglich des Durchmessers nochmals erweiterter Bereich vorgesehen, der zur Aufnahme eines Trägers 19 dient, auf welchem der eigentliche Drucksensor 21 angeordnet ist. Dieser kann beispielsweise als Siliziummembran mit integrierten piezoresistiven Halbleiterwiderständen ausgebildet sein. Der Träger weist Anschlußpins 23 auf, welche mittels Bonddrähten 25 mit dem Drucksensor 21 verbunden sind. In vorteilhafter Weise kann der Träger als TO-Gehäuse ausgebildet sein, die üblicherweise zur Aufnahme von Transistoren oder anderen Halbleiterbauelementen dienen. Hierdurch ergibt sich der Vorteil günstiger Herstellkosten.

Das TO-Gehäuse bzw. dessen Träger 19 kann dann nach dem Einsetzen in den erweiterten oberen Bereich des Durchbruchs des metallischen Meßzellengehäuses 9 mit diesem dicht verschweißt werden. Als Schweißverfahren kann hierbei das Widerstandsschweißverfahren eingesetzt werden, welches ebenfalls den Vorteil günstiger Herstellkosten mit sich bringt.

Nach dem Verschweißen des Trägers 19 mit dem Meßzellengehäuse 9 kann dann der verbleibende Innenraum des Durchbruchs 17 mit einem Druckübertragungsmedium 27 gefüllt werden.

Das Druckübertragungsmedium 27 besitzt vorzugsweise gelartige oder geleeartige Konsistenz. Bei einer gelartigen Konsistenz wird erfindungsgemäß die Viskosität so gewählt, daß ein Auslaufen des Druckübertragungsmediums 27 aus der Beaufschlagungsöffnung 29 des Meßzellengehäuses 9 selbst dann verhindert wird oder zumindest tolerierbar langsam erfolgt, wenn die Achse der Beaufschlagungsöffnung 29 nicht exakt parallel zur Schwerkraft verläuft und die Beaufschlagungsöffnung nach oben zeigt.

Bei Verwendung eines Druckübertragungsmediums mit geleeartiger Konsistenz ist ein Auslaufen infolge des sich in Richtung der Austrittsöffnung der Beaufschlagungsöffnung 29 verjüngenden Querschnitts ohnehin unmöglich. Bei geleeartiger Konsistenz des Druckübertragungsmediums 27 ist jedoch darauf zu achten, daß dessen Härte/Elastizität so gewählt werden, daß eine wirksame Druckübertragung von der Austrittsöffnung der Beaufschlagungsöffnung 29 auf den eigentlichen Drucksensor 21 gewährleistet ist.

Als Druckübertragungsmedium eignet sich insbesondere ein Zweikomponenten-Silikongel oder ein Zweikomponenten-Silikon-Kautschukgel mit jeweils geleeartiger oder gelartiger Konsistenz Verwendung. Ein derartiges Druckübertragungsmedium weist den Vorteil auf, daß unmittelbar nach dem Mischen der beiden Komponenten das Druckübertragungsmedium noch eine relativ hohe Viskosität aufweist, so daß ein einfaches Befüllen des Innenraums des Durchbruchs 17 des Meßzellengehäuses 9, insbesondere das vollständige Ausfüllen des Durchbruchs mit dem Druckübertragungsmedium, sichergestellt ist.

Die beiden Komponenten "härten" infolge einer chemischen Reaktion, die beispielsweise durch Zuführen von Wärme oder UV-Licht unterstützt werden kann aus bzw. nehmen dann die gewünschte geleeartige oder gelartige Konsistenz an. Die gewünschte Konsistenz kann durch das Festlegen eines entsprechenden Mischungsverhältnisses der beiden Komponenten eingestellt werden.

Nach dem Füllen des Innenraums des Durchbruchs 17 mit dem Druckübertragungsmedium wird eine Trennmembran 31 bodenseitig in die Ausnehmung 7 des unteren ersten Gehäuseteils 3a der Drucksensoreinheit 1 eingelegt. Die Trennmembran ist zumindest so groß gewählt, daß die bodenseitige Eintrittsöffnung der Zuführöffnung 15 für das Druckmedium abgedeckt ist. Zur Gewährleistung einer möglichst zuverlässigen Abdichtung kann die Trennmembran 31, wie in Fig. 1 dargestellt, kreisförmig ausgebildet sein, wobei der Durchmesser der Trennmembran ebenfalls im wesentlichen dem Innendurchmesser des unteren Bereichs der Ausnehmung 7 entspricht.

Um das Innere des Gehäuses 7 und gleichzeitig den Innenraum des Durchbruchs 17 des Meßzellengehäuses 9 sicher gegen das über die Zuführöffnung 15 zugeführte Druckmedium abzudichten, können sowohl an der unteren Stirnseite des Meßzellengehäuses 9 als auch im Boden der Ausnehmung 7 des unteren Gehäuseteils 3a Nuten zur Aufnahme von Dichtelementen 33 vorgesehen sein, die vorzugsweise als O-Ringe ausgebildet sein können. Die Tiefe der Nuten ist dabei so gewählt, daß die Dichtelemente, die eine ausreichende Elastizität bzw. Kompressibilität aufweisen, im nicht-montierten Zustand des Meßzellengehäuses geringfügig über die jeweilige Oberfläche hinausragen.

Nach dem Einlegen der Trennmembran 31 in die Ausnehmung 7 wird die Meßzelle 5 in die Ausnehmung eingeführt, bis diese ebenfalls mit ihrer Unterseite auf der Trennmembran 31 aufliegt.

In dieser Stellung wird die Meßzelle 5 fixiert, wobei sicherzustellen ist, daß ein ausreichender Druck in Richtung auf den Boden der Ausnehmung 7 zur Gewährleistung einer ausreichenden Dichtigkeit ausgeübt wird. Wie in Fig. 1 dargestellt, kann das Fixieren der Meßzelle 5 dadurch erfolgen, daß mittels eines Schälvorgangs ein oder mehrere Bereiche oder ein umlaufender Bereich der seitlichen Innenwandung der Ausnehmung 7 in eine das Meßzellengehäuse hintergreifende Stellung gebracht werden. Auf diese Weise kann gleichzeitig ein entsprechender Druck auf das Meßzellengehäuse 9 erzeugt werden, der auch nach Beendigung des Schälprozesses im wesentlichen erhalten bleibt.

Auf diese Weise können mittels eines einzigen Herstellungsschritts gleichzeitig der Innenraum des Durchbruchs 17 mit dem darin befindlichen Druckübertragungsmedium und auch der Innenraum der Ausnehmung 7 des unteren Gehäuseteils 3a abgedichtet werden.

Im oberen zweiten Gehäuseteil 3b sind in einem Steckeranschlußbereich, welcher als Buchse ausgebildet ist, Anschlußkontakte 37 vorgesehen, über die die Drucksensoreinheit 1 mittels eines nicht dargestellten Steckers kontaktiert werden kann. Die Anschlußkontakte 37 können beispielsweise mittels Anschlußleitungen 39 mit einer ebenfalls im oberen zweiten Gehäuseteil 3b gehaltenen elektronischen Schaltung 41 verbunden sein.

Die elektronische Schaltung 41 kann hierzu mittels Halteelementen 43 im Gehäuseteil 3b fixiert sein (vgl. Figur) oder auch unmittelbar von ins Gehäuseinnere ragenden Enden der beispielsweise in das Gehäuseteil 3b eingespritzten Anschlußkontakte getragen werden.

Die elektronische Schaltung 41 kann im einfachsten Fall lediglich aus einer gedruckten Leiterplatte bestehen, auf der die erforderlichen Bauelemente angeordnet sind. Gleichzeitig kann die Leiterplatte eine Fassung 45 für das Aufnehmen der Anschlußpins 23 des Trägers 19 aufweisen. Das Kontaktieren der elektronischen Schaltung mit dem Drucksensor 21 erfolgt dann in einfacher Weise gleichzeitig mit dem Aufstecken des oberen Gehäuseteils 3b auf das untere Gehäuseteil 3a.

Hierzu kann der untere Gehäuseteil 3a, wie in der Figur dargestellt, einen Aufnahmebereich 47 mit einer Schulter als Anschlag für die Stirnseite des oberen Gehäuseteils 3b aufweisen, sowie eine obere Gehäusewandung 49, die nach dem Aufstecken des oberen Gehäuseteils 3b auf das untere Gehäuseteil 3a über eine Schulter 51 an der Unterseite des oberen Gehäuseteils 3b hinausragt. Diese kann dann nach dem Zusammenfügen der beiden Gehäuseteile 3a, 3b zur festen Verbindung der Gehäuseteile umgebördelt werden.

Um einen dichten Abschluß des Gehäuseinnenraums zu gewährleisten, kann an der Verbindungsstelle der beiden Gehäuseteile 3a, 3b ein weiteres Dichtelement 53, beispielsweise in Form eines O-Rings, vorgesehen sein.

Die elektronische Schaltung dient zur Realisierung der Schaltfunktion(en) und kann in an sich bekannter Weise zusätzlich eine Temperaturkompensation des Sensorsignals und/oder eine Verstärkung des Signals bewirken.

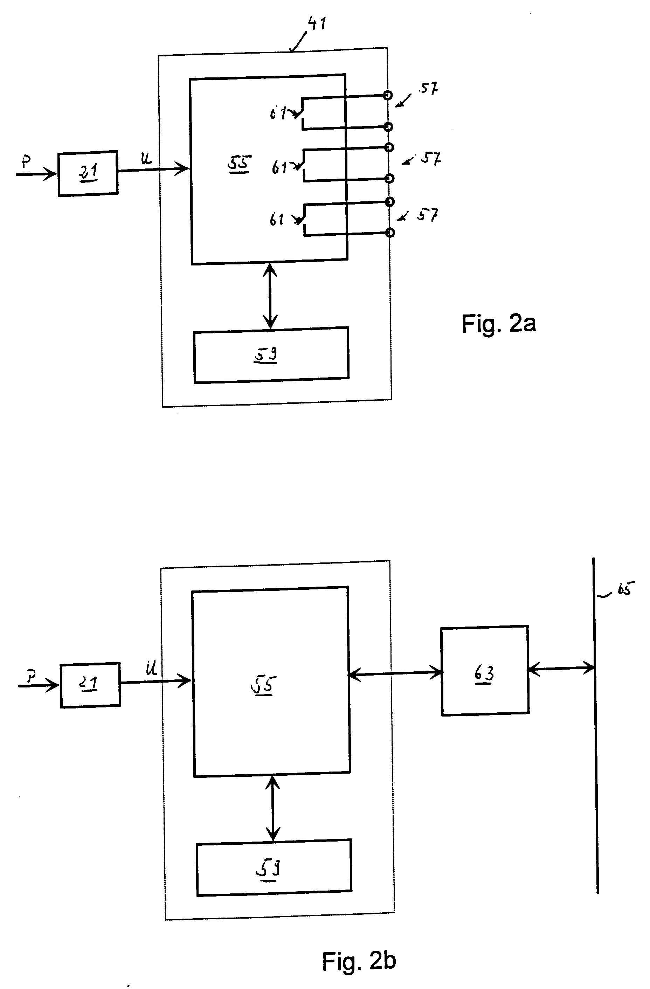

Fig. 2a zeigt eine erste Ausführungsform der elektronischen Schaltung 41, welcher das Signal U des Drucksensors 21 zugeführt wird. Der Drucksensor 21 erzeugt eine dem detektierten Druck p des zu überwachenden Druckmediums entsprechende, vorzugsweise proportionale Spannung U. Die elektronische Schaltung 41 umfaßt die Auswerte- und Schalteinheit 55 mit mehreren, im dargestellten Ausführungsbeispiel drei geschalteten Ausgängen 57. Dabei kann jeder der beiden Pole eines geschalteten Ausgangs 57 mit einem Anschlußkontakt 37 des Gehäuses 3 verbunden sein. Wird jedoch bei mehreren geschalteten Ausgängen ein Schalten gegenüber einem gemeinsamen Bezugspotential gewünscht, so können auch die betreffenden Pole miteinander verbunden und auf einen gemeinsamen Anschlußkontakt 37 gelegt werden. Ist beispielsweise das Schalten gegenüber dem Bezugspotential der Karosserie gewünscht, so kann auch jeweils nur ein Pol eines geschalteten Ausgangs 57 mit einem Anschlußkontakt 37 verbunden sein und der jeweils andere gemeinsame Pol auf das (metallische) Gehäuse 3 gelegt werden, welches über den Fortsatz 11 mit dem Bezugspotential des Kfz verbunden wird.

Der Auswerte- und Schalteinheit 55 ist ein Speicher 59 Zugeordnet, in dem die gewünschte Anzahl von Schaltschwellwerten gespeichert sein kann. Der Speicher 59 ist vorzugsweise als nicht-flüchtiger Speicher, beispielsweise als PROM, ausgebildet.

Gemäß der in Fig. 2a dargestellten Ausführungsform kann die Auswerte- und Schalteinheit 55 abhängig vom Ausgangssignal U des Drucksensors 21 (und damit abhängig vom Druck p des zu überwachenden Druckmediums) die gewünschten Schaltvorgänge durch das Schließen des dem betreffenden geschalteten Ausgang 57 zugeordneten Schalters 61 bewirken.

Im einfachsten Fall kann für jeden der drei dargestellten geschalteten Ausgänge 57 im Speicher 59 ein Schaltschwellwert gespeichert sein, wobei bei Überschreiten des niedrigsten Schaltschwellwertes ein erster der geschalteten Ausgänge 57, bei Überschreiten des zweithöchsten Schaltschwellwerts der zweite der geschalteten Ausgänge 57 und bei Überschreiten eines dritten Schaltschwellwerts der dritte der drei geschalteten Ausgänge 57 geschaltet werden kann. Selbstverständlich kann hierbei jeder Schalter 61 entweder als Schließer oder als Öffner ausgebildet sein.

Die Auswerte- und Schalteinheit 55 kann jedoch selbstverständlich auch infolge eines Über- und/oder Unterschreiten eines Schaltschwellwertes eine zeitliche Aufeinanderfolge des Ansteuerns der dargestellten geschalteten Ausgänge 57 auslösen. Hierzu können im Speicher 59 neben dem Schaltschwellwert entsprechende Zeiten gespeichert sein.

Bei der in Fig. 2b dargestellten Ausführungsform der Erfindung ist der Auswerte- und Schalteinheit 55 ein intelligentes Businterface 63 nachgeschaltet, mit dessen Hilfe die Auswerte- und Schalteinheit 55 Informationen über von ihr ermittelte erforderliche Schaltfunktionen über einen Bus 65 an eine nicht dargestellte übergeordnete Steuereinheit übermittelt werden. Die eigentlichen Schaltvorgänge können dann von der übergeordneten Steuereinheit ausgelöst werden. Bei der Ausführungsform gemäß Fig. 2b ergibt sich gegenüber dem Übertragen eines vorzugsweisen digitalisierten Sensorsignals U über ein Bussystem oder auf andere Weise an eine zentrale Steuereinheit der Vorteil, daß das Bussystem lediglich mit einer geringen Datenrate belastet wird, da die erforderliche Intelligenz zur Auswertung des Sensorsignals U bereits in der Druckschalteinrichtung integriert ist.

Auf diese Weise bietet die vorliegende Erfindung den Vorteil einer äußerst einfachen Anpassung der Funktionen der Druckschalteinrichtung an Kundenwünsche. Hierzu ist lediglich ein Redesign der Auswerte- und Schalteinheit 55 bzw. das Speichern geänderter Schaltschwellwerte im Speicher 59 erforderlich. Gegenüber einem bei bisher bekannten mechanischen Druckschaltern erforderlichen Redesign ist dies jedoch mit einem weitaus geringeren zeitlichen und finanziellen Aufwand verbunden.

## Patentansprüche

1. Druckschalteinrichtung, insbesondere für die Kraftfahrzeugtechnik,
a) mit einem in einem Gehäuse (3) angeordneten Drucksensor (21), welcher ein dem Druck (p) eines einer Zuführöffnung (15) des Gehäuses (3) zugeführten Druckmediums entsprechendes elektrisches Signal (U) erzeugt, und
b) mit einer Auswerte- und Schalteinheit (55), welcher das elektrische Sensorsignal (U) zugeführt ist und welche das Sensorsignal (U) mit wenigstens einem Schaltschwellwert vergleicht und bei Überschreiten und/oder Unterschreiten des Schaltschwellwertes eine Schaltfunktion oder eine Folge von Schaltfunktionen auslöst.

2. Druckschalteinrichtung nach Anspruch 1, **dadurch gekennzeichnet,** daß die Auswerte- und Schalteinheit (55) im Gehäuse (3) der Druckschalteinrichtung (1) angeordnet ist.

3. Druckschalteinrichtung nach Anspruch 1 oder 2, **dadurch gekennzeichnet,** daß der Auswerte- und Schalteinheit (55) ein Speicher (59) zur Speicherung des wenigstens einen Schaltschwellwertes nachgeordnet ist.

4. Druckschalteinrichtung nach einem der vorhergehenden Ansprüche, **dadurch gekennzeichnet,** daß jedem Schaltschwellwert ein Timer oder eine vorbestimmte Timerzeit zugeordnet ist.

5. Druckschalteinrichtung nach Anspruch 4, **dadurch gekennzeichnet,** daß der nach einem Schaltvorgang nach einem Über- oder Unterschreiten des wenigstens einen Schaltschwellwertes erreichte Zustand zumindest für die dem Schaltschwellwert zugeordnete Timerzeit aufrechterhalten wird.

6. Druckschalteinrichtung nach einem der vorhergehenden Ansprüche, **dadurch gekennzeichnet,** daß mehrere Schaltschwellwerte vorgesehen sind und daß wenigstens zwei Schaltschwellwerte zur Erzeugung einer Schwellwerthysteresefunktion einander zugeordnet sind, wobei der höhere oder der niedrigere der beiden Schwellwerte den Schaltpunkt für das Umschalten von einem ersten Schaltzustand in einen zweiten Schaltzustand und der jeweils andere der beiden Schaltschwellwerte den Schaltpunkt für das Umschalten von dem zweiten Schaltzustand in den ersten Schaltzustand definiert.

7. Druckschalteinrichtung nach einem der vorhergehenden Ansprüche, **dadurch gekennzeichnet,** daß die Schaltschwellwerte in einem nicht-flüchtigen Speicher (59) gespeichert sind.

8. Druckschalteinrichtung nach einem der vorhergehenden Ansprüche, **dadurch gekennzeichnet,** daß die Auswerte- und Schalteinheit (55) als Mikroprozessorschaltung ausgebildet ist und die Schaltfunktionen durch Software definiert sind.

9. Druckschalteinrichtung nach einem Ansprüche 1 bis 8, **dadurch gekennzeichnet,** daß die Auswerte- und Schalteinheit (55) einen anwenderspezifischen integrierten Schaltkreis zur Realisierung der Schaltfunktionen umfaßt.

10. Druckschalteinrichtung nach einem der Ansprüche 2 bis 9, **dadurch gekennzeichnet,** daß die Auswerte- und Schalteinheit (55) mit einem oder mehreren Ausgängen (57) mit Anschlußkontakten (37) des Gehäuses (3) verbunden ist, an welchen die Schaltfunktionen abgreifbar sind.

11. Druckschalteinrichtung nach Anspruch 10, **dadurch gekennzeichnet,** daß jeder Ausgang zwei Pole aufweist und daß die Auswerte- und Schalteinheit einen ersten Schaltzustand durch eine niederohmige Verbindung der beiden Pole eines Ausgangs (57) Anschlußkontakte und einen zweiten Schaltzustand durch eine hochohmige Verbindung der beiden Pole erzeugt.

12. Druckschalteinrichtung nach einem der vorhergehenden Ansprüche, **dadurch gekennzeichnet,** daß der Auswerte- und Schalteinheit (55) ein Businterface (63) nachgeschaltet ist, auf welchem die Auswerte- und Schalteinheit (56) Informationen betreffend zu bewirkende Schaltfunktionen an eine übergeordnete Steuereinheit übermittelt, wobei die Schaltfunktionen nach der Übermittlung der betreffenden Information von der übergeordneten Steuereinheit auslösbar sind.

13. Druckschalteinrichtung nach Anspruch 12, **dadurch gekennzeichnet,** daß das Businterface (63) im Gehäuse (3) der Druckschalteinrichtung (1) angeordnet ist.
